# EUROPÄISCHE PATENTSCHRIFT

(11) **EP 0 891 488 B1**
(45) Veröffentlichungstag und Bekanntmachung des Hinweises auf die Patenterteilung: **12.12.2001**
(21) Anmeldenummer: 97906110.8
(22) Anmeldetag: 21.02.1997
(51) Int. Cl.: F04B 53/18, F04B 1/20, F01B 3/00

(54) **AXIALKOLBENMASCHINE MIT INTERNEM SPÜLKREISLAUF**
AXIAL PISTON MACHINE WITH INTERNAL FLUSHING CYCLE
MACHINE A PISTON AXIAL AVEC CIRCUIT DE BALAYAGE INTERNE

(30) Priorität: 04.04.1996 DE 19613609
(43) Veröffentlichungstag der Anmeldung: 20.01.1999
(73) Patentinhaber: BRUENINGHAUS HYDROMATIK GMBH, 89275 Elchingen (DE)
(72) Erfinder: BECK, Josef, D-72401 Haigerloch (DE)
(74) Vertreter: Körfer, Thomas, Dipl.-Phys.
(86) Internationale Anmeldenummer: EP9700853
(87) Internationale Veröffentlichungsnummer: WO9738225

(56) Entgegenhaltungen:
- US-A- 2 825 499
- US-A- 2 929 551

## Beschreibung

Die Erfindung betrifft eine Axialkolbenmaschine, vorzugsweise in Schrägscheibenbauweise mit auf der Antriebswelle angeordneter umlaufender Zylindertrommel und sich auf einer gegebenenfalls im Schrägwinkel einstellbaren Schrägscheibe über Gleitschuhe abstützenden Arbeitskolben, bei welcher der mit Leck-Betriebsmedium gefüllte Gehäuseinnenraum des Pumpengehäuses durch ein Wälzlager begrenzt ist, durch das die Antriebswelle in dem Pumpengehäuse gelagert ist, und außerhalb des Wälzlagers eine Wellendichteinrichtung angeordnet ist und bei welcher eine Einrichtung zum Befördern von Betriebsmedium durch den Lagerspalt des Wälzlagers vorgesehen ist.

Bei derartigen Axialkolbenmaschinen wird bei kritischen Anwendungen, welche beispielsweise sind Betrieb der Maschine bei hohen Temperaturen, Betrieb mit wasserhaltigen Betriebsmedien und besonderen Anforderungen an die Betriebsdauer und Sicherheit, eine externe Lagerspülung über einen Außenanschluß benötigt. Eine solche externe Spülung dient neben der Lagerschmierung gleichzeitig dazu, die Wellendichteinrichtung zu kühlen, zu schmieren und eventuelle Ablagerungen der Dichtlippe zu vermeiden. Eine solche externe Kühlung und Schmierung ist aufwendig, da insbesondere eine Anpassung an den jeweiligen Betriebszustand der Pumpe erforderlich ist.

In der US-A 28 25 499 ist ein Kühlkompressor in Form einer Axialkolbenpumpe der eingangs genannten Art beschrieben. Dort ist zwischen dem Wälzlager für die Antriebswelle und der die Antriebswelle gegenüber dem Gehäuse nach außen abdichtenden Wellendichteinrichtung eine Zahnradpumpe angeordnet. Diese Zahnradpumpe saugt Betriebsmedium aus dem Gehäuseinnenraum an und fördert es zur Kühlung und Schmierung zu der Wellendichteinrichtung. Um das Betriebsmedium in den Gehäuseinnenraum zurückzufördern, ist ein Kanal vorgesehen, welcher das Betriebsmedium aus dem Raum vor der Wellendichtung durch den Lagerspalt des Wälzlagers in den Gehäuseinnenraum zurückführt. Damit ist ein interner Spülkreislauf gegeben, der jedoch den Nachteil hat, daß eine gesonderte kleine komplette, aus Rotor und Stator bestehende Pumpeinrichtung vorgesehen ist. Dies ist baulich aufwendig und hat den weiteren Nachteil, daß in dem Bereich der Axialkolbenpumpe, in welchem erfahrungsgemäß der größte Wärmestau entsteht, ein weiteres, Bauraum beanspruchendes Aggregat zwischen Wälzlager und Wellendichtung angeordnet ist. Schließlich wird durch die zusätzliche Spül-Pumpeinrichtung das Betriebsmedium unmittelbar gegen die Wellendichteinrichtung gefördert, so daß es einer sehr feinen Abstimmung in der Auslegung der Fördermenge der Spülpumpeinrichtung bedarf, um eine gewünschte Spülung und Kühlung für alle Drehzahlbereiche der Axialkolbenpumpe zu haben.

Der Erfindung liegt die Aufgabe zugrunde, einen internen Zwangsspülkreislauf bei einer Axialkolbenmaschine der genannten Art zu schaffen, für den kein zusätzlicher Bauraum erforderlich ist und der unkritisch für alle Drehzahl-Betriebsbereiche der Axialkolbenmaschine wirksam ist.

Zur Lösung dieser Aufgabe ist eine Axialkolbenmaschine mit den Merkmalen des Oberbegriffes des Patentanspruches 1 dadurch gekennzeichnet, daß vor dem Lagerspalt des Wälzlagers auf der Seite des Gehäuseinnenraumes eine mit der Antriebswelle umlaufende Förderscheibe vorgesehen ist, die Betriebsmedium durch den Lagerspalt in den Ringraum zwischen Wälzlager und Wellendichteinrichtung drückt und daß der Ringraum durch einen Ablaufkanal mit dem Gehäuseinnenraum verbunden ist.

Diese Ausbildung gewährleistet eine drehzahlabhängige Spülmittelmenge sowohl für das Wälzlager als auch für die Wellendichteinrichtung, d.h. eine größere Menge von Betriebsmittel wird bei hoher Drehzahl und entsprechend eintretender höherer Wärmeentwicklung gefördert. Auch erhöht sich die Fördermenge bei mit höherer Temperatur niedriger werdender Viskosität des Betriebsmittels. Es sind keine zusätzlichen Leitungsverbindungen für eine Spülpumpeinrichtung erforderlich und es ist kein zusätzlicher Platzbedarf für die erfindungsgemäße Förderscheibe erforderlich, da sie im sowieso vorhandenen Leckölraum des Gehäuseinnenraumes vor dem Wälzlager liegt. Es ist nur ein zusätzliches Bauteil in Form der Förderscheibe erforderlich, welches kostengünstig als Schmiedeteil, Sinterteil oder Fein- oder Druckgußteil hergestellt werden kann.

Der Erfindung liegt die Erkenntnis zugrunde, daß bei modernen Axialkolbenmaschine dieser Bauart, die mit hohen Drücken und hohen Drehzahlen betrieben werden, der Gehäuseinnenraum als Leckölraum für das Betriebsmittel stets vollständig mit Leck-Betriebsmedium gefüllt ist. Es ist daher nicht erforderlich, für eine interne Zwangsspülung eine gesonderte Pumpeinrichtung vorzusehen, sondern es genügt durch Fördermittel, hier erfindungsgemäß eine mit der Antriebswelle umlaufende Förderscheibe, für eine Betriebsmittelströmung zu sorgen. Ein zusätzlicher Vorteil der erfindungsgemäßen Anordnung der Förderscheibe liegt darin, daß der Spülmittelstrom von der erfindungsgemäßen Förderscheibe zunächst durch das Wälzlager geführt ist und erst dann zu der Wellendichteinrichtung, die gegen Druck und Mengenschwankungen des Spülmittelstromes empfindlicher ist.

Zweckmäßige Ausgestaltungen der Erfindung sind in den Unteransprüchen gekennzeichnet. Beispielsweise Ausführungsformen der Erfindung werden im Folgenden anhand der beigefügten Zeichnungen näher beschrieben. Es zeigen:
Fig. 1 schematisch im Schnitt eine Axialkolbenmaschine mit erfindungsgemäßem internem Spülmittelkreislauf,
Fig. 2 in vergrößerter Darstellung im Ausschnitt eine schematische Schnittansicht des Lagerbereiches der Axialkolbenmaschine nach Fig. 1,
Fig. 3 eine Seitenansicht und
Fig. 4 eine Stirnansicht einer ersten Ausführungsform der Förderscheibe
Fig. 5 eine Seitenansicht und
Fig. 6 eine Stirnansicht einer zweiten Ausführungsform der Förderscheibe
Fig. 7 eine Seitenansicht und
Fig. 8 eine Stirnansicht einer dritten Ausführungsform der Förderscheibe sowie
Fig. 9 eine Seitenansicht und
Fig. 10 eine Stirnansicht einer vierten Ausführungsform der Förderscheibe.

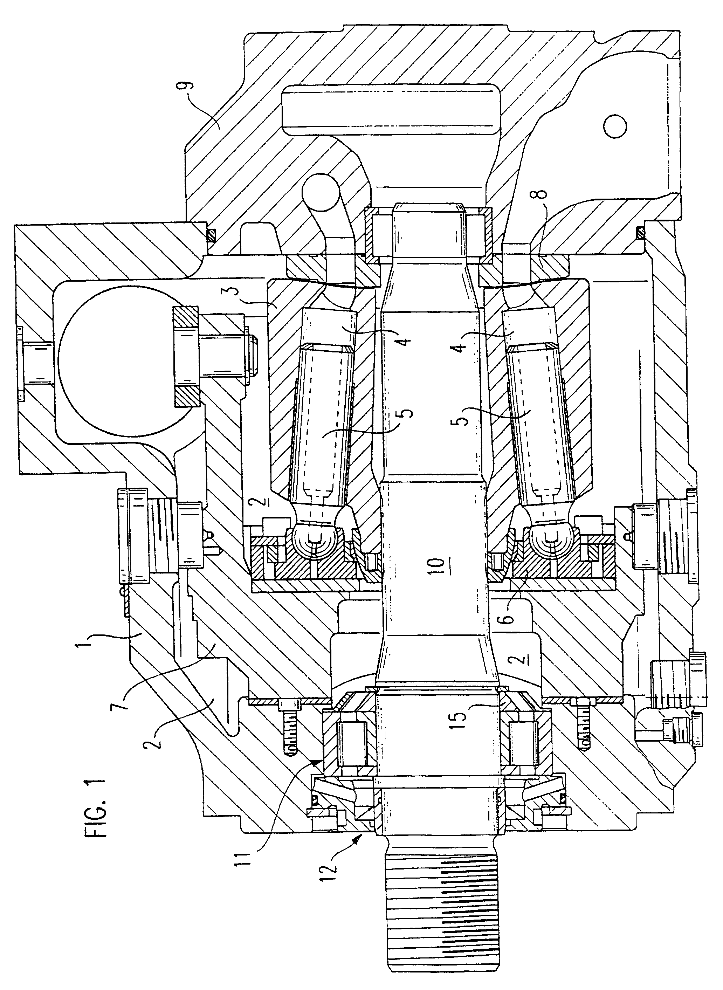

Die in Figur 1 im Schnitt dargestellte Axialkolbenmaschine ist von üblicher Bauart und besteht aus einem Gehäuse 1 mit einer im Gehäuseinnenraum 2 drehbar angeordneten Zylindertrommel 3 mit darin in Zylinderräumen 4 in hin- und herbewegbaren Kolben 5, welche sich über Gleitkörper 6 auf einem schwenkbaren Schrägscheibenkörper 7 abstützen. In der auf Fig. 1 rechten Seite schließt sich an die Zylindertrommel 3 eine Steuerplatte 8 an, welche an den Gehäusedeckel 9 mit den Zu- und Abführkanälen grenzt. All diese Teile einer Axialkolbenmaschine sind üblich und brauchen hier nicht in ihrem funktionellen Zusammenwirken beschrieben zu werden.

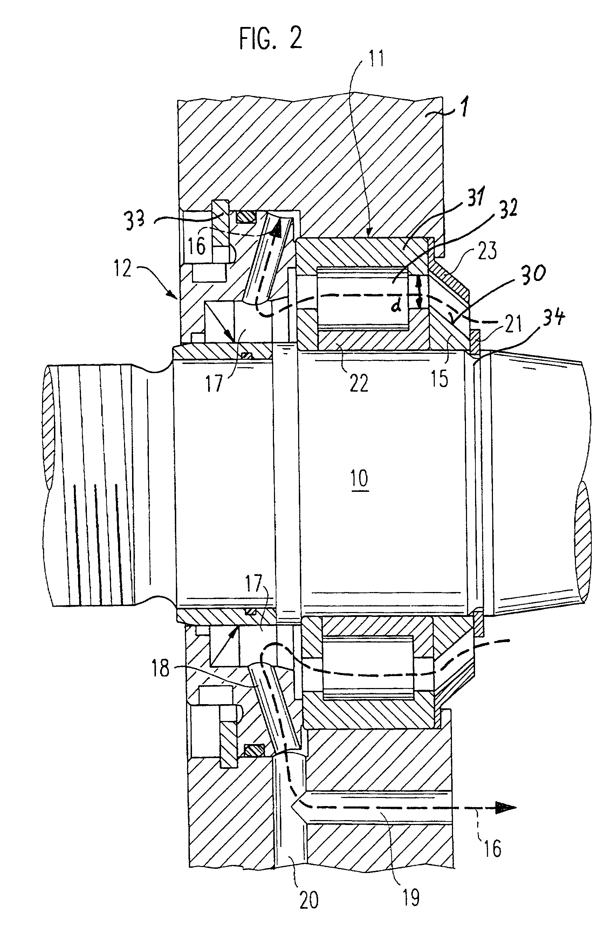

Die Zylindertrommel 3 sitzt drehfest auf der als Triebwelle 10 bezeichneten An- und/oder Abtriebswelle, welche in dem Gehäuse 1 über ein Wälzlager 11 oder eine Wälzlagereinrichtung gelagert ist. Außerhalb des Wälzlagers 1 ist der mit Lecköl gefüllte Gehäuseinnenraum 2 durch eine Wellendichteinrichtung 12 abgedichtet. Der Bereich des Wälzlagers 11 und der Wellendichtung 12 ist in Fig. 2 vergrößert dargestellt. Das Wälzlager 11 bzw. eine entsprechende Wälzlagereinrichtung ist der Bereich der größten Wärmeentwicklung der Axialkolbenmaschine und Wälzlager 11 und Wellendichtung 12 sind zu kühlen und spülen, da sie der Bereich des größten Verschleißrisikos für die Lebensdauer der gesamten Maschine sind. Um einen Kühl- und Spülkreislauf durch das Leckmedium, welches gleichzeitig das Betriebsmedium der Maschine ist, zu erreichen, ist bei der erfindungsgemäßen Ausbildung auf der Triebwelle 10 unmittelbar benachbart dem Wälzlager 11 auf der Seite des Gehäuseinnenraumes 2 eine Förderscheibe 15 angeordnet, welche aus dem Gehäuseinnenraum 2 Lecköl - wie durch Pfeile 16 verdeutlicht - durch das Wälzlager 11 in den Raum 17 zwischen Wälzlager und Wellendichtung 12 fördert. Von dort gelangt es durch Kanäle 18 und 19 zurück in den Gehäuseinnenraum 2. Zwischen den Kanälen 18 und 19 zweigt ein Spülölkanal 20 ab, welcher an der Gehäuseaußenseite ggfs. an einen externen Spülölkreis angeschlossen werden kann.

Die Förderscheibe 15 kann wie dargestellt durch einen Klemmring 21 auf der Triebwelle 10 befestigt sein oder auch unmittelbar mit dem inneren Lagerring 22 des Wälzlagers 11 verbunden sein.

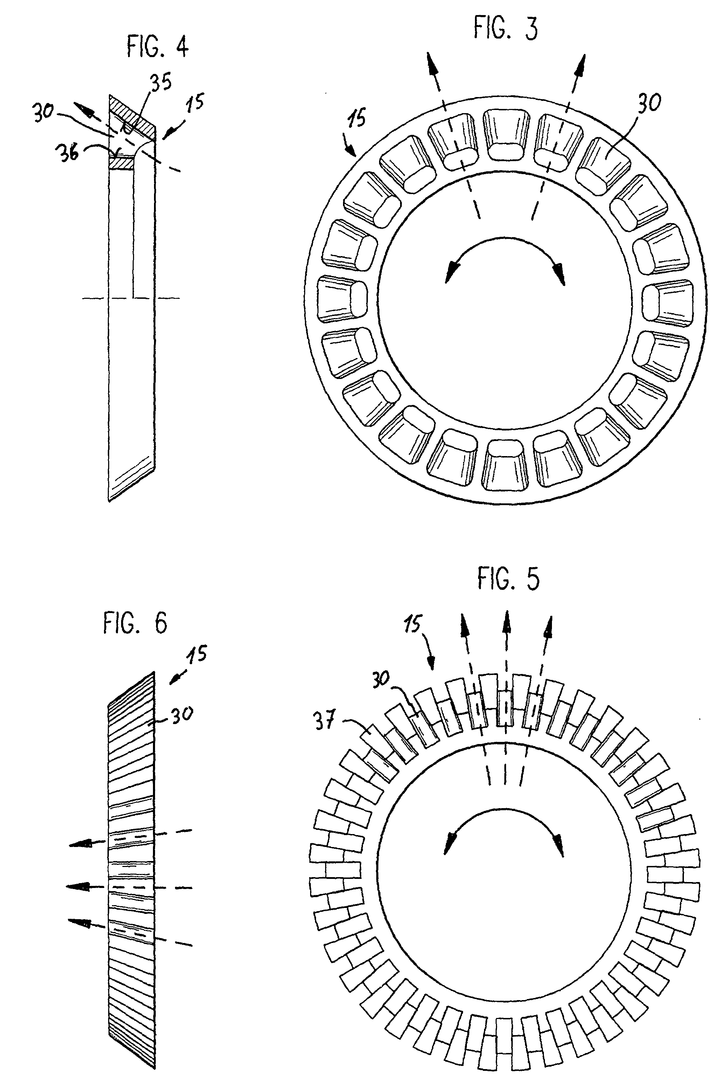

In den Fig. 3 bis 10 werden weitere Ausführungsformen dieser Förderscheibe 15 dargestellt, wobei bei einer Ausführung der Förderscheibe 15 als nach außen stimseitig offener Fliehkraft-Förderring ein die Förderscheibe 15 radial nach außen abdeckender Abschirmring 23, wie in Fig. 2 dargestellt, angeordnet sein kann.

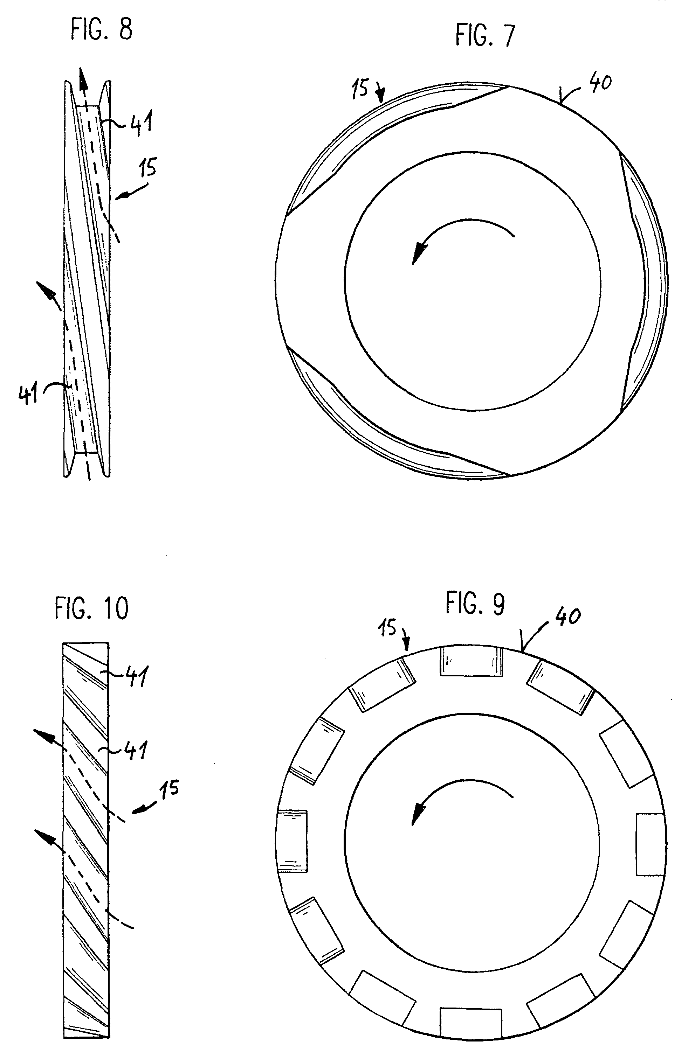

In den Fig. 3 bis 10 sind die möglichen Drehrichtungen der Förderscheibe 15 durch dicke, durchgezogene Pfeile angegeben und der Förderstrom des Spülöles durch dicke strichlierte Pfeile markiert. Ersichtlich sind die erste und zweite Ausführungsform der Förderscheibe 15 entsprechend Darstellungen in Fig. 3 bis 6 für beide Drehrichtungen der Welle 10 geeignet, da ihre Förderwirkung auf der dem Lecköl aufgeprägten Fliehkraft beruht. Die als Fördergewinde ausgebildeten Förderscheiben 15 nach Fig. 7 bis 10 sind ersichtlich nur für eine Drehrichtung geeignet. Die fünf gezeigten Ausbildungsformen der Förderscheibe 15 sind nur beispielhaft. Durch Ausbildung und Auswahl der geeigneten Förderscheibe 15 kann für verschiedene Maschinengrößen und deren Anwendungsfälle auf einfache Weise der Zwangsspülkreislauf optimiert werden.

Bei dem in Fig. 2 dargestellten Ausführungsbeispiel weist die Förderscheibe 15 eine Anzahl gleichmäßig über den Scheibenumfang verteilter, axialer Durchgangskanäle 30 auf, die zum Wälzlager 11 hin konisch ansteigen. Der Abschirmring 23 überdeckt die Durchgangskanäle 30, wobei sich der Abschirmring 23 ebenfalls zum Wälzlager 11 hin konisch erweitert. Die Durchgangskanäle 30 sind im in Fig. 2 dargestellten Ausführungsbeispiel daher als umfängliche Nuten ausgebildet, die durch den Abschirmring 23 radial verschlossen werden. Die axialen Durchgangskanäle 30 erweitern sich in Richtung auf das Wälzlager 11 hin. Dies erleichtert den Eintritt des Betriebsmediums in den relativ engen Spalt des Wälzlagers 11.

Aus Fig. 2 wird ein weiterer Vorteil der erfindungsgemäßen Förderscheibe 15 erkennbar. Das Wälzlager 11 umfaßt einen die Triebwelle 10 umgreifenden inneren Lagerring 22 und einen äußeren Lagerring 31, zwischen welchen die Wälzelemente 32 angeordnet sind. Der innere Lagerring 22 und der äußere Lagerring 31 sind im in Fig. 2 dargestellten Ausführungsbeispiel im Querschnitt L-förmig ausgeformt, um eine axiale Führung der Wälzelemente 32 zu erreichen. Die Lage des äußeren Lagerrings 31 ist durch die Wellendichteinrichtung 12 über ein erstes Befestigungsmittel 33, z.B. einen Klemmring, an dem Gehäuse 1 fixiert. In der Praxis besteht das Problem, daß der axiale Sitz des inneren Lagerrings 22 nur innerhalb eines relativ großen Toleranzfensters bestimmt ist. Die Toleranz des axialen Sitzes des inneren Lagerrings 22 ergibt sich durch Addition der Herstellungstoleranzen des Klemmrings 33, der Wellendichtung 12, des äußeren Lagerrings 31, der Wälzelemente 32 und schließlich des inneren Lagerrings 22 selbst. Bei der axialen Fixierung des inneren Lagerrings 22 an der Triebwelle 10 ist die innerhalb des relativ großen Toleranzfensters variierende axiale Lage des inneren Lagerrings 22 auszugleichen. Hierzu sind geeignete Ausgleichselemente vorzusehen.

Entsprechend einer erfindungsgemäßen Weiterbildung bietet sich die Möglichkeit, die Förderscheibe 15 als in ihrer axialen Bemessung abstimmbare Ausgleichsscheibe zum Ausgleich der den axialen Sitz des inneren Lagerrings 22 bestimmenden Fertigungstoleranzen zu verwenden. Dabei ist die Förderscheibe 15 zwischen dem inneren Lagerring 22 und einem zweiten Befestigungsmittel 21 jeweils eng anliegend angeordnet. Das zweite Befestigungsmittel 21 kann z.B. als Klemmring ausgebildet sein, der in eine an der Triebwelle 10 vorgesehene Nut 34 eingreift. Der axiale Sitz des inneren Lagerrings 22 ist daher durch die axiale Abmessung der Förderscheibe 15 vorgegeben. Durch Anpassen der axialen Bemessung der Förderscheibe 15 an den jeweiligen axialen Sitz des inneren Lagerrings 22 einer bestimmten zu fertigenden Axialkolbenmaschine läßt sich daher das axiale Lagerspiel des Wälzlagers 11 reduzieren, ohne daß dazu weitere Bauteile, wie Toleranzausgleichsscheiben, notwendig sind.

Die Förderscheiben 15 können zu diesem Zweck mit geringfügig variierenden, unterschiedlichen axialen Bemessungen hergestellt werden. Bei der Montage wird dann jeweils bei einer bestimmten zu montierenden Axialkolbenmaschine der genaue Abstand zwischen der in Fig. 2 rechten Stirnfläche des inneren Lagerrings 22 und der in Fig. 2 linken Stirnfläche des Klemmrings 21 ermittelt und eine an diese Abmessung angepaßte Förderscheibe 15 ausgewählt. Alternativ ist es möglich, eine mit einer gewissen Zugabe hergestellte Förderscheibe 15 durch Schleifen oder Drehen an den gemessenen Abstand genau anzugleichen. Der Förderscheibe 15 kommt daher neben der Umwälzwirkung des Betriebsmediums durch den Lagerspalt des Wälzlagers 11 die zusätzliche Funktion einer abstimmbaren Ausgleichsscheibe zu. Dadurch wird im Bereich des Wälzlagers 11 eine besonders kompakte Bauweise erzielt und die Verwendung von zusätzlichen Beilagscheiben oder Toleranzausgleichsscheiben kann entfallen.

Die vorstehend beschriebene zusätzliche Funktion der Förderscheibe 15 als Ausgleichsscheibe kann selbstverständlich bei allen in den Fig. 2 bis 9 dargestellten Ausführungsbeispielen zur Anwendung kommen.

Das in den Fig. 3 und 4 dargestellte Ausführungsbeispiel zeichnet sich dadurch aus, daß die axialen Durchgangskanäle 30 nicht am Umfang der Förderscheibe 15, sondern radial weiter innen liegend ausgebildet sind. Der Abschirmring 23 kann entfallen, da die Durchgangskanäle auch in radialer Richtung geschlossen sind. Auch die in den Fig. 3 und 4 dargestellten Durchgangskanäle 30 steigen in Richtung auf das Wälzlager 11 radial konisch an, da die periphere Abschlußfläche 35 der Durchgangskanäle 30 geneigt ausgebildet ist. Da die gegenüberliegende, innere Begrenzungsfläche 36 parallel zu der Triebwelle 10 bzw. parallel zu der Rotationsachse der Zylindertrommel 3 verläuft, ergibt sich eine Erweiterung der axialen Durchgangskanäle 30 in Richtung auf das Wälzlager 11. Dadurch ergibt sich der bereits beschriebene Vorteil einer Diffusorwirkung und ferner einer relativ gleichmäßigen Verteilung des Betriebsmediums über den an dem Wälzlager 11 ausgebildeten Spalt. Vorzugsweise stimmt die radiale Öffnung der Durchgangskanäle 30 auf der Seite der Wälzlager 11 mit dem in Fig. 2 eingezeichneten Abstand d zwischen dem inneren Lagerring 22 und dem äußeren Lagerring 31 im wesentlichen überein.

Bei dem in den Fig. 5 und 6 dargestellten Ausführungsbeispiel sind die am Umfang der Förderscheibe 15 ausgebildeten Durchgangskanäle 30 durch schaufelartige Elemente 37 getrennt. Die schaufelartigen Elemente 37 können gegenüber der Rotationsachse der Förderscheibe 15 in Art einer Turbine verdreht sein. Durch die turbinenartige Ausbildung der Förderscheibe 15 ergibt sich eine besonders gute Förderwirkung der Förderscheibe 15.

Bei den in den Fig. 7 und 8 einerseits und in den Fig. 9 und 10 andererseits dargestellten Ausführungsbeispielen weist die Förderscheibe 15 ein Fördergewinde auf. Das Fördergewinde besteht aus am Umfang 40 der Förderscheibe 15 spiralförmig angeordneten Rillen 41. In dem in den Fig. 7 und 8 dargestellten Ausführungsbeispiel erstrecken sich die Rillen 41 spiralförmig über den Umfang 40 der Förderscheibe 15. Diese Ausbildung ist insbesondere bei Axialkolbenmaschinen mit relativ niedrigr Drehzahl vorteilhaft. Im Vergleich dazu sind die Nuten 41 bei dem in den Fig. 9 und 10 dargestellten Ausführungsbeispiel mit einem geringeren Neigungswinkel gegenüber der Rotationsachse der Förderscheibe 15 geneigt. Dies hat den Vorteil eines reibungsarmen Durchflusses des Betriebsmediums durch die Förderscheibe 15. Diese Ausbildung ist insbesondere für Axialkolbenmaschinen relativ hoher Drehzahl geeignet.

Durch die erfindungsgemäße Weiterbildung ergibt sich für das Wälzlager 11 der Axialkolbenmaschine ein geringer Verschleiß und eine ungute Kühlwirkung, so daß die Lebensdauer beträchtlich erhöht wird. Ablagerungen an der Dichtlippe werden vermieden.

## Patentansprüche

1. Axialkolbenmaschine, vorzugsweise in Schrägscheibenbauweise, mit auf einer Triebwelle (10) angeordneter umlaufender Zylindertrommel (3) und sich auf einer ggfs. im Schrägwinkel verstellbaren Schrägscheibe (7) über Gleitschuhe (6) abstützenden Arbeitskolben (5), bei welcher der mit Leck-Betriebsmedium gefüllte Gehäuseinnenraum (2) des Pumpengehäuses (1) durch ein Wälzlager (11) begrenzt ist, durch das die Triebwelle (10) in dem Pumpengehäuse (I) gelagert ist, wobei außerhalb des Wälzlagers (11) eine Wellendichteinrichtung (12) angeordnet ist, und bei welcher eine Einrichtung zum Fördern von Betriebsmedium durch den Lagerspalt des Wälzlagers (11) vorgesehen ist,
**dadurch gekennzeichnet,**
**daß** vor dem Lagerspalt des Wälzlagers (11) auf der Seite des Gehäuseinnenraumes (2) eine mit der Triebwelle (10) umlaufende Förderscheibe (15) vorgesehen ist, die Betriebsmedium durch den Lagerspalt in einen Ringraum (17) zwischen Wälzlager (11) und Wellendichteinrichtung(12) drückt und daß der Ringraum (17) durch einen Ablaufkanal (18, 19) mit dem Gehäuseinnenraum (2) verbunden ist.

2. Axialkolbenmaschine nach Anspruch 1,
**dadurch gekennzeichnet,**
**daß** das Wälzlager (11) einen inneren Lagerring (22) aufweist, der zumindest einseitig axial über die Förderscheibe (15) und ein an der Förderscheibe (15) an der dem Wälzlager (11) abgelegenen Seite angreifendes Befestigungsmittel (21) an der Triebwelle (10) fixiert ist, wobei die zwischen dem inneren Lagerring (22) und dem Befestigungsmittel (21) angeordnete Förderscheibe (15) als in ihrer axialen Bemessung abstimmbare Ausgleichsscheibe zum Ausgleich der den axialen Sitz des inneren Lagerrings (22) bestimmenden Fertigungstoleranzen dient.

3. Axialkolbenmaschine nach Anspruch 2,
**dadurch gekennzeichnet,**
**daß** das Befestigungsmittel ein in eine Nut (34) der Triebwelle (10) eingreifender Klemmring (21) ist.

4. Axialkolbenmaschine nach einem der Ansprüche 1 bis 3,
**dadurch gekennzeichnet,**
**daß** die Förderscheibe (15) mit dem inneren Lagerring (22) fest verbunden ist.

5. Axialkolbenmaschine nach einem der vorhergehenden Ansprüche,
**dadurch gekennzeichnet,**
**daß** die Förderscheibe (15) unmittelbar benachbart dem Wälzlager (11) auf der Triebwelle (10) drehfest angeordnet ist.

6. Axialkolbenmaschine nach einem der vorhergehenden Ansprüche,
**gekennzeichnet durch**
eine Ausbildung der Förderscheibe (15), daß sie in beiden Drehrichtungen Betriebsmedium **durch** den Lagerspalt des Wälzlagers (11) fördert.

7. Axialkolbenmaschine nach einem der vorhergehenden Ansprüche,
**gekennzeichnet durch**
eine Ausbildung der Förderscheibe (15) als Fliehkraftfördereinrichtung.

8. Axialkolbenmaschine nach einem der vorhergehenden Ansprüche,
**dadurch gekennzeichnet,**
**daß** die Förderscheibe (15) mit einer Anzahl gleichmäßig über den Scheibenumfang verteilter, axialer Durchgangskanäle (30) versehen ist, die zum Wälzlager (11) hin radial konisch ansteigen und von einem zum Wälzlager (11) hin sich konisch erweiternden Abschirmring (23) überdeckt sind.

9. Axialkolbenmaschine nach einem der Ansprüche 1 bis 7,
**dadurch gekennzeichnet,**
**daß** die Förderscheibe (15) mit einer Anzahl gleichmäßig auf einem zur Triebwelle (10) konzentrischen Kreis verteilter, axialer Durchgangskanäle (30) versehen ist, die zum Wälzlager (11) hin radial konisch ansteigen.

10. Axialkolbenmaschine nach Anspruch 8 oder 9,
**dadurch gekennzeichnet,**
**daß** sich die Durchgangskanäle (30) in Richtung auf das Wälzlager (11) erweitern.

11. Axialkolbenmaschine nach einem der Ansprüche 1 bis 7,
**dadurch gekennzeichnet,**
**daß** die Förderscheibe (15) ein Fördergewinde (41) aufweist.

## Claims

1. Axial piston machine, preferably of swash plate construction, having a revolving cylinder drum (3) arranged on a drive shaft (10) and working pistons (5) supported via slippers (6) on a swash plate (7), which may be adjustable in its tilt angle, in which machine the housing inner chamber (2) of the pump housing (1) filled with leakage operating medium is bounded by a roller bearing (11) by means of which the drive shaft (10) is mounted in the pump housing (1), whereby a shaft sealing arrangement (12) is arranged outside the roller bearing (11), and in which machine a device for conveying operating medium through the bearing gap of the roller bearing (11) is provided,
**characterised in that**,
there is provided before the bearing gap of the roller bearing (11), on the side towards the housing inner chamber (2), a conveyor plate (15) revolving with the drive shaft (10), which plate urges operating medium through the bearing gap into an annular space (17) between roller bearing (11) and shaft sealing arrangement (12) and **in that** the annular space (17) is connected with the housing inner chamber (2) through a discharge channel (18, 19).

2. Axial piston machine according to claim 1,
**characterised in that**,
the roller bearing (11) has an inner bearing ring (22) which is axially fixed, at least on one side, to the drive shaft (10) by way of the conveyor plate (15) and a securing means (21) engaging on the conveyor plate (15) on the side away from the roller bearing (11) whereby the conveyor plate (15), arranged between the inner bearing ring (22) and the securing means (21), serves as a compensating plate which can be adjusted in its axial dimension for compensation of the manufacturing tolerances which determine the axial seat of the inner bearing ring (22).

3. Axial piston machine according to claim 2,
**characterised in that**,
the securing means is a clamping ring (21) engaging into a groove (34) of the drive shaft (10).

4. Axial piston machine according to any of claims 1 to 3,
**characterised in that**,
the conveyor plate (15) is fixedly connected with the inner bearing ring (22).

5. Axial piston machine according to any preceding claim,
**characterised in that**,
the conveyor plate (15) is arranged rotationally fixed on the drive shaft (10) directly neighbouring the roller bearing (11).

6. Axial piston machine according to any preceding claim,
**characterised by**,
a configuration of the conveyor plate (15) such that it conveys operating medium through the bearing gap of the roller bearing (11) in both directions of rotation.

7. Axial piston machine according to any preceding claim,
**characterised by**,
a configuration of the conveyor plate (15) as a centrifugal force conveying device.

8. Axial piston machine according to any preceding claim,
**characterised in that**,
the conveyor plate (15) is provided with a number of axial through-channels (30), evenly distributed over the plate periphery, which channels rise radially conically towards the roller bearing (11) and are covered over by a screening ring (23) which widens conically towards the roller bearing (11).

9. Axial piston machine according to any of claims 1 to 7,
**characterised in that**,
the conveyor plate (15) is provided with a number of axial through-channels (30) evenly distributed on a circle concentric with the drive shaft (10), which through-channels rise radially conically towards the roller bearing (11).

10. Axial piston machine according to claim 8 or 9,
**characterised in that**,
the through-channels (30) widen in the direction towards the roller bearing (11).

11. Axial piston machine according to any of claims 1 to 7,
**characterised in that**,
the conveyor plate (15) has a conveyor thread (41).

## Revendications

1. Machine à pistons axiaux, de préférence du type de réalisation à disque incliné, comprenant un tambour cylindrique rotatif (3) calé sur un arbre menant (10), et des pistons de travail (5) prenant appui, par l'intermédiaire de patins de glissement (6), sur un disque incliné (7) à angle d'inclinaison éventuellement réglable, machine dans laquelle l'espace interne (2) du carter (1) de la pompe, empli d'un fluide de travail suintant, est délimité par un palier de roulement (11) par l'intermédiaire duquel l'arbre menant (10) est monté dans ledit carter (1) de la pompe, un dispositif (12) d'étanchement de l'arbre étant implanté à l'extérieur du palier de roulement (11) ; et dans laquelle un dispositif est prévu pour refouler du fluide de travail à travers l'interstice de portée du palier de roulement (11),
**caractérisée par le fait**
**qu'**il est prévu devant l'interstice de portée du palier de roulement (11), du côté de l'espace interne (2) du carter, un disque refouleur (15) qui tourne avec l'arbre menant (10) et refoule du fluide de travail, à travers l'interstice de portée, jusque dans un espace annulaire (17) situé entre le palier de roulement (11) et le dispositif (12) d'étanchement de l'arbre ; et par le fait que ledit espace annulaire (17) est relié audit espace interne (2) du carter par l'intermédiaire d'un canal d'écoulement (18, 19).

2. Machine à pistons axiaux selon la revendication 1,
**caractérisée par le fait**
**que** le palier de roulement (11) présente une bague intérieure de portée (22) assujettie axialement à l'arbre menant (10), au moins d'un côté, par l'intermédiaire du disque refouleur (15) et d'un moyen de fixation (21) en prise avec ledit disque refouleur (15) sur le côté tourné à l'opposé dudit palier de roulement (11), sachant que le disque refouleur (15), interposé entre la bague intérieure de portée (22) et le moyen de fixation (21), sert de disque compensateur dont la dimension axiale est modulable, et qui assure la compensation des tolérances de fabrication déterminant l'assise axiale de ladite bague intérieure de portée (22).

3. Machine à pistons axiaux selon la revendication 2,
**caractérisée par le fait**
**que** le moyen de fixation est une bague de coincement (21) pénétrant dans une rainure (34) de l'arbre menant (10).

4. Machine à pistons axiaux selon l'une des revendications 1 à 3,
**caractérisée par le fait**
**que** le disque refouleur (15) est relié rigidement à la bague intérieure de portée (22).

5. Machine à pistons axiaux selon l'une des revendications précédentes,
**caractérisée par le fait**
**que** le disque refouleur (15) est verrouillé en rotation avec l'arbre menant (10), au voisinage direct du palier de roulement (11).

6. Machine à pistons axiaux selon l'une des revendications précédentes,
**caractérisée par**
une réalisation du disque refouleur (15) telle qu'il refoule du fluide de travail, à travers l'interstice de portée du palier de roulement (11), dans les deux directions de rotation.

7. Machine à pistons axiaux selon l'une des revendications précédentes,
**caractérisée par**
une réalisation du disque refouleur (15) en tant que dispositif de refoulement centrifuge.

8. Machine à pistons axiaux selon l'une des revendications précédentes,
**caractérisée par le fait**
**que** le disque refouleur (15) est muni d'un certain nombre de canaux axiaux de passage (30) uniformément répartis sur le pourtour dudit disque, qui montent coniquement vers le palier de roulement (11), dans le sens radial, et sont recouverts par une bague d'occultation (23) s'évasant coniquement en direction dudit palier de roulement (11).

9. Machine à pistons axiaux selon l'une des revendications 1 à 7,
**caractérisée par le fait**
**que** le disque refouleur (15) est muni d'un certain nombre de canaux axiaux de passage (30) uniformément répartis sur un cercle concentrique à l'arbre menant (10), qui montent coniquement vers le palier de roulement (11) dans le sens radial.

10. Machine à pistons axiaux selon la revendication 8 ou 9,
**caractérisée par le fait**
**que** les canaux de passage (30) s'évasent en direction du palier de roulement (11).

11. Machine à pistons axiaux selon l'une des revendications 1 à 7,
**caractérisée par le fait**
**que** le disque refouleur (15) comporte une volute de refoulement (41).
